# EUROPÄISCHE PATENTSCHRIFT

(11) **EP 1 421 333 B1**
(45) Veröffentlichungstag und Bekanntmachung des Hinweises auf die Patenterteilung: **04.04.2012**
(21) Anmeldenummer: 02767206.2
(22) Anmeldetag: 13.07.2002
(51) Int. Cl.: G06F 9/445

(54) **VERFAHREN, VORRICHTUNG UND COMPUTERPROGRAMMPRODUKT ZUR AKTUALISIERUNG VON STEUERGERÄT-DATEN**
METHOD, DEVICE AND COMPUTER PRODUCT FOR UPDATING DATA OF A CONTROL DEVICE
PROCEDE, DISPOSITIF ET PRODUIT INFORMATIQUE DESTINES A ACTUALISER DES DONNEES D'UN APPAREIL DE COMMANDE

(30) Priorität: 01.09.2001 DE 10143030
(43) Veröffentlichungstag der Anmeldung: 26.05.2004
(73) Patentinhaber: Bayerische Motoren Werke Aktiengesellschaft, 80809 München (DE)
(72) Erfinder: HAYDN, Andreas, 94032 Passau (DE)
(86) Internationale Anmeldenummer: PCT/EP2002/007819
(87) Internationale Veröffentlichungsnummer: WO 2003/021192

(56) Entgegenhaltungen:
- DE-A- 4 003 507
- DE-A- 19 750 380
- DE-A- 19 755 977
- DE-A1- 3 410 082
- US-A- 5 084 821

## Beschreibung

Die Erfindung betrifft ein Verfahren, eine Vorrichtung und ein Computer-Programm-Produkt nach dem Oberbegriff des betreffenden unabhängigen Patentanspruchs.

Heutige Fahrzeuge, wie insbesondere PKWs, weisen üblicherweise eine Vielzahl von Steuergeräten und ein oder mehrere Fahrzeug-Kommunikations-Busse bzw. Computer-Busse (I-/K-Bus, MOST-Bus, CAN-Bus etc.) auf, die mit den Steuergeräten einen Kommunikations-Verbund bilden. Steuergeräte, wie beispielsweise ein ABS-Steuergerät oder ein Steuergerät zur kennfeldgesteuerten Motorsteuerung, werden in der Regel durch Steuergerät-Software ablaufgesteuert, wobei das Steuergerät die Ausgangsgrößen der ihm zugeordneten Sensoren verarbeitet und Aktuatoren in Abhängigkeit von den Ausgangsgrößen und der durch die Steuergerät-Software vorgenommenen Ablaufsteuerung ansteuert. Bei der Behebung von Unfallschäden, im Fall einer Wartung oder auch im Rahmen einer "Rückrufaktion" kann eine erneute Speicherung und/oder Aktualisierung von Steusrgerät-Daten zum Betrieb der ein oder mehreren Steuergeräte beim Vertragshändler erforderlich werden. Diese Speicherung und/oder Aktualisierung wird über die Diagnose-Schnittstelle des Kraftfahrzeugs, die eine verhältnismäßig langsame Kommunikationsschnittstelle zu den Steuergeräten darstellt, vorgenommen. Da sowohl die Anzahl der Steuergeräte als auch die Länge der Steuergerät-Daten bzw. des Software-Codes der Steuergeräte ständig zunimmt, steigt der Zeitaufwand für die Speicherung und/oder Aktualisierung der Steuergerät-Daten über diese langsame Schnittstelle stetig. Dieser Zeitaufwand wird in der Regel dem Kunden oder dem Fahrzeughersteller In Rechnung gestellt.

Die DE 34 10 082 A1 geht aus von einem Steuergerät für Kraftfahrzeuge mit wenigstens einem Speicher und einem Mikrocomputer. Das Steuergerät erhält über einen Bus Daten und der Speicher ist programmierbar und nichtflüchtig. Die Druckschrift beschäftigt sich mit dem Problem, dass beim mechanischen Austausch des Speicher-ICs mit dem Zweck der Veränderung der Speicherdaten des Mikrocomputers leicht Schmutz oder Feuchtigkeit in das Gehäuse des Steuergeräts eindringen kann Zur Lösung dieses Problems wird vorgeschlagen, dass die Datenübertragung über den Bus seriell erfolgt und wenigstens ein Teil dieser Daten in den Speicher programmiert wird.

Aus der DE 40 03 507 A ist ein digitales Steuergerät, insbesondere ein Zünd- und/oder Einspritzsteuergerät für Kraftfahrzeuge, mit einem Mikrorechner und einem fest verbundenen, die Steuerdaten und das Programm enthaltenden Hauptspeicher bekannt. Die Druckschrift beschäftigt sich mit der Aufgabe, dass nachträgliche Programm- und Datenänderungen leicht durchgeführt werden können, ohne dass hierfür ein externes Programmiergerät erforderlich ist. Zur Lösung dieser Aufgabe wird vorgeschlagen, dass der Hauptspeicher als Schreib-/Lesespeicher (RAM, EEPROM od. dgl.) ausgebildet ist und dass ein beim Einschalten des Steuergeräts ablaufendes Basisprogramm enthaltender, das Laden des Hauptspeichers aus einem externen Datenträger über eine Schnittstelle auf einen Ladebefshl hin steuernder und den Programmzugriff des Mikrorechners auf den Hauptspeicher umschaltender Hilfsspeicher vorgesehen ist. Der Hilfsspeicher ist als Festwertspeicher (ROM, EPROM od. dgl.) ausgebildet. Ein externer Datenträger wird angeschlossen und die Übertragung der Daten wird durch den eingebauten Hilfsspeicher gesteuert. Der Hilfsspeicher bewirkt zudem eine automatische Umschaltung des Programmzugriffs des Mikrorechners auf den als Schreib-/Lesespeicher ausgebildeten Hauptspeicher.

Die Aufgabe der Erfindung besteht daher in einer Verkürzung der Zeitdauer zur Speicherung und/oder Aktualisierung der Steuergerät-Daten von ein oder mehreren Stauergeräten eines Kraftfahrzeugs.

Die Aufgabe der Erfindung wird durch den Anspruch 1 verfahrensmäßig, durch den Anspruch 13 vorrichtungsmäßig und gemäß dem Anspruch 14 durch ein Computer-Programm-Produkt gelöst. Vorteilhafte Ausgestaltungen der Erfindung sind in den abhängigen Patentansprüchen angegeben.

Ein wichtiger Aspekt der Erfindung besteht in der Verwendung eines ggü. der Diagnose-Schnittstelle des Kraftfahrzeugs schnelleren Fahrzeug-Kommunikationskanals zur Übertragung von auf einem Datenträger gespeicherten Steuergeräte-Daten in das betreffende Steuergerät, in die betreffenden Steuergeräte bzw. deren zugeordnete Speicher. Bei einer bevorzugten Ausführungsform der Erfindung werden die Steuergerät-Daten über das CD-ROM-Lesegerät eines Fahrzeug-Navigationssystems und/oder über das DVD- bzw. CD-ROM-Lesegerät eines Audio- und/oder Video-Systems des Fahrzeugs und einen optischen oder elektrischen Fahrzeug-Kommunikations-Bus zur Speicherung und/oder Aktualisierung in das Steuergerät bzw. die Steuergeräte übertragen. Bei Verwendung eines solchen Lesegeräts werden die zu speichernden bzw. zu aktualisierenden Daten erfindungsgemäß auf einer CD-ROM oder DVD gespeichert und über das Lesegerät bzw. Laufwerk ausgelesen. Eine solche Vorgehensweise erlaubt eine schnelle, personalunaufwendige und unkomplizierte Speicherung oder Aktualisierung von Steuergeräte-Daten, z. B. durch Werkstattpersonal.

Ebenso ist es denkbar, dem Fahrzeugbesitzer Datenträger anzubieten, auf der zusätzliche "Features", wie "Komfort-Features", "Sicherheits-Features" oder "Performance-Features" in Form von Software-Code gespeichert sind. Dieser Software-Code kann beispielsweise auf die Steuer-Charakteristik eines Steuergeräts, eines Fahrzeug-Computers oder auch auf sonstige Einrichtungen bzw. Ausstattungen des Fahrzeugs Einfluss nehmen. Damit wäre es dem Kunden bzw. Fahrzeugbesitzer oder der Werkstatt möglich, nachträglich "Sonderausstattung" softwaremäßig zu "aktivieren" oder zu "bifden". Bei einem Komfort-Feature kann es sich beispielsweise um eine softwaremäßige Verbesserung oder um die Möglichkeit einer bspw. hydraulischen oder pneumatischen Einstellung der Stoßdämpfer der Fahrwerksabstimmung handeln. Bei einem Sicherheits-Feature kann es sich beispielsweise um eine softwaremäßig verbesserte ABS-Steuerung oder um eine selektive Steuerung der Bremszylinder jeden Fahrzeugrads zur Stabilisierung des Fahrzeugs in kritischen Fahrsituationen handeln. Bei einem Performance-Feature kann es sich beispielsweise um eine softwaremäßige Verbesserung oder Veränderung der Motorleistung oder Motorcharakteristik handeln.
Unter Steuergerät-Daten soll insbesondere Programmcode zur Ablaufsteuerung mindestens eines Steuergeräts und/oder zur Kennfeldsteuerung durch ein Steuergerät verstanden werden. Unter Kennfeldsteuerung wird insbesondere eine Ablaufsteuerung für ein Steuergerät verstanden, die zwei und mehr Betriebsparameter berücksichtigt. Erfindungsgemäß ist vorgesehen, die Steuergerät-Daten in einem dem Steuergerät zugeordneten Speicher, wie insbesondere ein Halbleiterspeicher, zu speichern, der nicht notwendigerweise im Steuergerät angeordnet ist. Hierbei kann es sich auch um einen Datenspeicher handeln, auf den zwei oder mehr Steuergeräte zugreifen.

Bei einer alternativen oder ergänzenden Ausführungsform der Erfindung ist vorgesehen, dass die Steuergerät-Daten aus einem Datenträger ausgelesen werden, der neben den Steuergerät-Daten auch Navigations-Daten zur Verwendung durch ein im Kraftfahrzeug vorhandenes Navigations-System bzw. Zielführungs-System aufweist. Ein solcher Datenträger mit Navigations-Daten, wie insbesondere eine CD oder DVD, wird üblicherweise zum Betrieb eines im Fahrzeug befindlichen Navigations-Systems belassen. Da die Navigations-Daten, wie z.B. Straßen-Daten etc., relativ rasch veralten, wird ein solcher Datenträger üblicherweise in regelmäßigen Abständen, z. B. halbjährlich im Rahmen eines Abonnements, gegen einen aktuelleren Datenträger ausgetauscht.

Bei einer anderen alternativen oder ergänzenden Ausführungsform wird vorgeschlagen, dass die Steuergerät-Daten aus einem optischen Datenträger, wie insbesondere eine CD-ROM bzw. Compact Disc, eine DVD bzw. Digital Versatile Disc, einem holographischen Datenspeicher oder dgl. oder aus einem elektrischen Datenträger, wie insbesondere eine Festplatte, ein Halbleiter-Speicher, ein Flash-Speicher, eine Chip-Karte, ein EE-PROM oder dgl. ausgelesen werden. Solche leicht zu transportierenden Datenträger mit hoher Speicherkapazität lassen sich relativ einfach und preisgünstig über entsprechende Lesegeräte bzw. Schnittstellen an den Fahrzeug-Kommunikations-Bus zur Speicherung und/oder Aktualisierung von Steuergerät-Daten "ankoppeln".

Gemäß einer alternativen oder ergänzenden Ausführungsform ist vorgesehen, dass das Auslesen und/oder Speichern unter der Kontrolle einer Speicher- bzw. Aktualisierungs-Vorrichtung, wie insbesondere ein programmgesteuerter Mikroprozessor, vorgenommen wird. Dies erlaubt die softwaremäßige Realisierung von kryptographischen und die Datenintegrität sicherstellenden Maßnahmen.

Nach einer weiteren alternativen oder ergänzenden Ausführungsform der Erfindung ist vorgesehen, dass die in dem Steuergerät gespeicherten, zu aktualisierenden Steuergerät-Daten und die auf dem Datenträger gespeicherten Daten jeweils mit einem deren Aktualität kennzeichnenden Merkmal, wie insbesondere ein Datum und/oder eine Versionsbezeichnung, versehen worden sind und/oder ältere Steuergerät-Daten durch jüngere Steuergerät-Daten aktualisiert bzw. ersetzt werden. Alternativ oder ergänzend ist bei einer Ausführungsform der Erfindung vorgesehen, dass die Speicher- bzw. Aktualisierungs-Vorrichtung auf Fahrzeug-Daten zugreift, wie das konkrete Fahrzeug und/oder den konkreten Fahrzeugtyp kennzeichnende Daten, und daraufhin aus einer Mehrzahl von auf dem Datenträger gespeicherten Steuergerät-Daten diejenigen Steuergerät-Daten ausliest, die dem anhand der Fahrzeug-Daten ermittelten Fahrzeug bzw. dessen Steuergeräten zur Speicherung und/oder Aktualisierung zugedacht worden sind. Alternativ oder ergänzend ist bei einer Ausführungsform der Erfindung vorgesehen, dass die auf dem Datenträger gespeicherten Steuergerät-Daten eine Mehrzahl von Daten-Abschnitten aufweisen, die jeweils die Steuergerät-Daten eines anderen Steuergeräts darstellen und/oder aktualisieren bzw. ersetzen. Alternativ oder ergänzend ist bei einer Ausführungsform der Erfindung vorgesehen, dass die Speicher- bzw. Aktualisierungs-Vorrichtung zur Speicherung und/oder Aktualisierung der Steuergerät-Daten zumindest teilweise eine auf dem Datenträger gespeicherte Speicher- und/oder Aktualisierungs-Anweisung, insbesondere eine Speicher- und/oder Aktualisierungs-Ablaufsteuerung, ausliest und abarbeitet. Diese Maßnahmen ermöglichen eine weitgehend automatisierte und zuverlässige software-kontrollierte Aktualisierung, insbesondere bei Verwendung eines programmgesteuerten Mikroprozessors.

Alternativ oder ergänzend ist bei einer Ausführungsform der Erfindung vorgesehen, dass die auf dem Datenträger gespeicherten Steuergerät-Daten verschlüsselt worden und/oder mit gegen Verfälschung schützenden Kontroll-Daten, wie eine Prüfsumme oder dgl., versehen worden sind. Alternativ oder ergänzend ist bei einer Ausführungsform der Erfindung vorgesehen, dass die Speicher- bzw. Aktualisierungs-Vorrichtung die aus dem Datenträger ausgelesenen Steuergerät-Daten entschlüsselt und/oder anhand der Kontroll-Daten auf ihre Urverfälschtheit hin überprüft und/oder eine Aktuallsierung bzw. Ersetzung lediglich bei korrekter Entschlüsselung oder bei Unverfälschtheit veranlasst. Alternativ oder ergänzend ist bei einer Ausführungsform der Erfindung vorgesehen, dass in dem Steuergerät Steuergerät-Daten gespeichert werden, die eine ihre Authentizität und/oder Version kennzeichnende Information, wie insbesondere Kontroll-Daten, aufweisen.

Erfindungsgemäß ist vorgesehen, dass die Speicherung und/oder Aktualisierung der Steuergerät-Daten erst nach einer entsprechenden Freigabe durch eine Autorisierungs-Vorrichtung vorgenommen wird, wobei die Autorisierungs-Vorrichtung bevorzugt unter der Kontrolle des Fahrzeugherstellers des betreffenden Fahrzeugs steht. Alternativ oder ergänzend ist bei einer Ausführungsform der Erfindung vorgesehen, dass die Fahrgestellnummer des betreffenden Fahrzeugs und/oder die Steuergerät-Daten des betreffenden Fahrzeugs charakterisierende Aktualisierungs-Hinweise in einer Computer-Datenbank, vorzugsweise beim Fahrzeughersteller, gespeichert bzw. dokumentiert werden. Mit diesen Maßnahmen lässt sich weitgehend verhindern, dass Unbefugte softwaremäßige Eingriffe in die Fahrzeugelektronik zum Nachteil von Sicherheit und Fahrzeuglebensdauer vornehmen können.

Erfindungsgemäß wird vorgeschlagen, eine bekannte Vorrichtung zur Aktualisierung von in mindestens einem Steuergerät eines Kraftfahrzeugs gespeicherten Steuergerät-Daten, wie insbesondere ein Programmcode zur Ablaufsteuerung des Steuergeräts und/oder zur Kennfeldsteuerung, derart weiterzubilden, dass die Vorrichtung von ein oder mehreren der vorstehenden erfindungsgemäßen Maßnahmen Gebrauch macht.

Des weiteren wird vorgeschlagen, ein Computer-Programm-Produkt, das direkt in den internen Speicher einer Aktualisierungs-Vorrichtung, wie insbesondere eines digitalen Computes, ladbar ist, derart weiterzubilden, dass es Programm-Abschnitte aufweist, die die Ausführung von ein oder mehreren der vorstehenden erfindungsgemäßen Maßnahmen veranlassen.

## Patentansprüche

1. Verfahren zur Speicherung und/oder Aktualisierung von Steuergerät-Daten, wie insbesondere ein Programmcode zur Ablaufsteuerung mindestens eines Steuergeräts und/oder zur Kennfeldsteuerung, mindestens eines Steuergeräts eines Kraftfahrzeugs mit einer Diagnose-Schnittstelle, die in einem dem Steuergerät zugeordneten Speicher, wie insbesondere ein Halbleiterspeicher, gespeichert werden, mit den folgenden Schritten :
- Auslesen der Steuergerät-Daten aus einem Datenträger,
- Speichern der Steuergerät-Daten in dem dem Steuergerät zugeordneten Speicher,
- die Speicherung und/oder Aktualisierung der Steuergerät-Daten wird erst nach einer entsprechenden Freigabe durch eine Autorisierungs-Vorrichtung vorgenommen, wobei die Autorisierungs-Vorrichtung bevorzugt unter der Kontrolle des Fahrzeugherstellers des betreffenden Fahrzeugs steht, und
- über einen ggü. der Diagnose-Schnittstelle schnelleren Fahrzeug-Kommunikationskanal werden die auf dem Datenträger gespeicherten Steuergerät-Daten in den dem betreffenden Steuergerät zugeordneten Speicher übertragen.

2. Verfahren nach Anspruch 1, **dadurch gekennzeichnet, dass** die Steuergerät-Daten aus einem Datenträger ausgelesen werden, der neben den Steuergerät-Daten auch Navigations-Daten zur Verwendung durch ein im Kraftfahrzeug vorhandenes Navigations-System bzw. Zielführungs-System aufweist.

3. Verfahren nach Anspruch 1 oder 2, **dadurch gekennzeichnet, dass** die Steuergerät-Daten aus einem optischen Datenträger, wie insbesondere eine CD-ROM bzw. Compact Disc, eine DVD bzw. Digital Versatile Disc, einem holographischen Datenspeicher oder dgl. oder aus einem elektrischen Datenträger, wie insbesondere eine Festplatte, ein Halbleiter-Speicher, ein Flash-Speicher, eine Chip-Karte, ein EE-PROM oder dgl. ausgelesen werden.

4. Verfahren nach Anspruch 1, **dadurch gekennzeichnet, dass** das Auslesen und/oder Speichern unter der Kontrolle einer Speicher-bzw. Aktualisierungs-Vorrichtung, wie insbesondere ein programmgesteuerter Mikroprozessor, vorgenommen wird.

5. Verfahren nach Anspruch 1, **dadurch gekennzeichnet, dass** die in dem Steuergerät gespeicherten, zu aktualisierenden Steuergerät-Daten und die auf dem Datenträger gespeicherten Daten jeweils mit einem deren Aktualität kennzeichnenden Merkmal, wie insbesondere ein Datum und/oder eine Versionsbezeichnung, versehen worden sind und/oder ältere Steuergerät-Daten durch jüngere Steuergerät-Daten aktualisiert bzw. ersetzt werden.

6. Verfahren nach Anspruch 4, **dadurch gekennzeichnet, dass** die Speicher- bzw. Aktualisierungs-Vorrichtung auf Fahrzeug-Daten zugreift, wie das konkrete Fahrzeug und/oder den konkreten Fahrzeugtyp kennzeichnende Daten, und daraufhin aus einer Mehrzahl von auf dem Datenträger gespeicherten Steuergerät-Daten diejenigen Steuergerät-Daten ausliest, die dem anhand der Fahrzeug-Daten ermittelten Fahrzeug bzw. dessen Steuergeräten zur Speicherung und/oder Aktualisierung zugedacht worden sind.

7. Verfahren nach Anspruch 1, **dadurch gekennzeichnet, dass** die auf dem Datenträger gespeicherten Steuergerät-Daten eine Mehrzahl von Daten-Abschnitten aufweisen, die jeweils die Steuergerät-Daten eines anderen Steuergeräts darstellen und/oder aktualisieren bzw. ersetzen.

8. Verfahren nach Anspruch 4, **dadurch gekennzeichnet, dass** die Speicher- bzw. Aktualisierungs-Vorrichtung zur Speicherung und/oder Aktualisierung der Steuergerät-Daten zumindest teilweise eine auf dem Datenträger gespeicherte Speicher-und/oder Aktualisierungs-Anweisung, insbesondere eine Speicher-und/oder Aktualisierungs-Ablaufsteuerung, ausliest und abarbeitet.

9. Verfahren nach Anspruch 1, **dadurch gekennzeichnet, dass** die auf dem Datenträger gespeicherten Steuergerät-Daten verschlüsselt worden und/oder mit gegen Verfälschung schützenden Kontroll-Daten, wie eine Prüfsumme oder dgl., versehen worden sind.

10. Verfahren nach Anspruch 9, **dadurch gekennzeichnet, dass** die Speicher- bzw. Aktualisierungs-Vorrichtung die aus dem Datenträger ausgelesenen Steuergerät-Daten entschlüsselt und/oder anhand der Kontroll-Daten auf ihre Unverfälschtheit hin überprüft und/oder eine Aktualisierung bzw. Ersetzung bei korrekter Entschlüsselung oder bei Unverfälschtheit veranlasst.

11. Verfahren nach Anspruch 1 oder 2, **dadurch gekennzeichnet, dass** in dem Steuergerät Steuergerät-Daten gespeichert werden, die eine ihre Authentizität und/oder Version kennzeichnende Information, wie insbesondere Kontroll-Daten, aufweisen.

12. Verfahren nach Anspruch 1, **dadurch gekennzeichnet, dass** die Fahrgestellnummer des betreffenden Fahrzeugs und/oder die Steuergerät-Daten des betreffenden Fahrzeug charakterisierende Daten in einer Computer-Datenbank, vorzugsweise beim Fahrzeughersteller, gespeichert werden.

13. Vorrichtung zur Speicherung und/oder Aktualisierung von Steuergerät-Daten, wie insbesondere ein Programmcode zur Ablaufsteuerung mindestens eines Steuergeräts und/oder zur Kennfeldsteuerung, mindestens eines Steuergeräts eines Kraftfahrzeugs, die in einem dem Steuergerät zugeordneten Speicher, wie insbesondere ein Halbleiterspeicher, gespeichert werden, **dadurch gekennzeichnet, dass** die Vorrichtung zur Durchführung eines Verfahrens nach einem oder mehreren der vorstehenden Verfahrens-Ansprüche weitergebildet worden ist.

14. Computer-Programm-Produkt, das direkt in den internen Speicher einer Speicher-bzw. Aktualisierungs-Vorrichtung, wie insbesondere ein digitaler Computer, ladbar ist, **dadurch gekennzeichnet, dass** es Programm-Abschnitte zur Ausführung eines Verfahrens nach einem oder mehreren der vorstehenden Verfahrens-Ansprüche aufweist, wenn das Produkt auf der Speicher-bzw. Aktualisierungs-Vorrichtung abläuft.

## Claims

1. A method for storing and/or updating control device data, such as, more especially a programme code for the sequence control of at least one control device and/or for the control of a characteristic map, of at least one control device of a motor vehicle with a diagnostic interface, which is stored in a memory associated with the control device, such as, more especially, a semiconductor memory, having the following steps:
- reading out the control device data from a data carrier
- storing the control device data in the memory associated with the control device,
- the storage and/or updating of the control device data is only carried out after corresponding clearance by an authorisation mechanism, wherein the authorisation mechanism is preferably under the control of the vehicle producer of the relevant vehicle, and
- the control device data stored on the data carrier are transmitted via a vehicle communication channel, which is faster than the diagnostic interface, into the memory associated with the relevant control device.

2. A method according to claim 1, **characterised in that** the control device data are read out from a data carrier, which, apart from the control device data, also has navigation data for use by a navigation system or route guidance system present in the motor vehicle.

3. A method according to claim 1 or 2, **characterised in that** the control device data are read out from an optical data carrier, such as, more especially, a CD-ROM or compact disc, a DVD or digital versatile disc, a holographic data memory or the like or from an electric data carrier, such as, more especially, a hard disc, a semiconductor memory, a flash memory, a chip card, an EE-PROM or the like.

4. A method according to claim 1, **characterised in that** the reading out and/or the storage is carried out under the control of a memory or updating mechanism, such as, more especially, a programme-controlled microprocessor.

5. A method according to claim 1, **characterised in that** the control device data stored in the control device and to be updated and the data stored on the data carrier have in each case been provided with a feature identifying how up to date they are, such as, more especially, a date and/or a version identification, and/or earlier control device data are updated or replaced by more recent control device data.

6. A method according to claim 4, **characterised in that** the storage or updating mechanism accesses vehicle data, such as data identifying the specific vehicle and/or the specific vehicle type, and then, from a plurality of control device data stored on the data carrier, reads out the control device data which were intended for the vehicle or its control devices determined using the vehicle data for storage and/or updating.

7. A method according to claim 1, **characterised in that** the control device data stored on the data carrier have a plurality of data sections, which in each case represent and/or update or replace the control device data of another control device.

8. A method according to claim 4, **characterised in that** the memory or updating mechanism for storing and/or updating the control device data at least partially reads out and processes a storage and/or updating instruction stored on the data carrier, more especially a storage and/or updating sequence control.

9. A method according to claim 1, **characterised in that** the control device data stored on the data carrier have been encoded and/or have been provided with control data, such as a check sum or the like, which protects against falsification.

10. A method according to claim 9, **characterised in that** the storage or updating mechanism decodes the control device data read out from the data carrier and/or checks them for their non-falsification using the control data and/or initiates updating or replacement in the event of correct decoding or non-falsification.

11. A method according to claim 1 or 2, **characterised in that** control device data, which have information, such as, more especially, control data, identifying their authenticity and/or version, are stored in the control device.

12. A method according to claim 1, **characterised in that** the data identifying the vehicle identification number of the relevant vehicle and/or the control device data of the relevant vehicle are stored in a computer database, preferably with the vehicle producer.

13. A device for storing and/or updating control device data, such as, more especially, a programme code for the sequence control of at least one control device and/or for control of a characteristic map, at least of a control device of a motor vehicle, which data are stored in a memory associated with the control device, such as, more especially, a semiconductor memory, **characterised in that** the mechanism has been developed to carry out a method according to any one or more of the preceding method claims.

14. A computer programme product, which can be directly loaded in the internal memory of a storage or updating mechanism, such as, more especially, a digital computer, **characterised in that** it has programme sections for carrying out a method according to any one or more of the preceding method claims when the product runs on the memory or updating mechanism.

## Revendications

1. Procédé d'enregistrement et/ou d'actualisation de données d'un appareil de commande en particulier d'un code programme pour commander le déroulement du fonctionnement d'au moins un appareil de commande et/ou pour commander un champ de caractéristiques, d'au moins un appareil de commande d'un véhicule automobile ayant une interface de diagnostic, données enregistrées dans une mémoire associée à l'appareil de commande, notamment une mémoire semi-conductrice,
procédé comprenant les étapes suivantes :
- lecture des données de l'appareil de commande à partir d'un support de données,
- enregistrement des données de l'appareil de commande dans la mémoire associée à l'appareil de commande,
- enregistrement et/ou actualisation des données de l'appareil de commande seulement après libération correspondante par un dispositif d'autorisation,
* le dispositif d'autorisation étant de préférence sous le contrôle du constructeur du véhicule concerné, et
- par l'intermédiaire d'un canal de communication du véhicule plus rapide que l'interface de diagnostic, on transmet les données de l'appareil de commande enregistrées sur le support de données dans la mémoire associée à l'appareil de commande concerné.

2. Procédé selon la revendication 1,
**caractérisé en ce que**
les données de l'appareil de commande sont lues dans un support de données qui à côté des données de l'appareil de commande, contient également les données de navigation pour être utilisées par un système de navigation existant dans le véhicule automobile ou un système de guidage vers une destination.

3. Procédé selon la revendication 1 ou 2,
**caractérisé en ce que**
les données de l'appareil de commande sont extraites d'un support de données optique, tel que notamment un CD-ROM ou compact-disque, un DVD ou disque numérique réversible, une mémoire holographique de données ou analogue ou encore d'un support de données électrique, notamment un disque dur, une mémoire à semi-conducteurs, une mémoire flash, une carte à puce, une mémoire EE-PROM ou analogue.

4. Procédé selon la revendication 1,
**caractérisé en ce que**
la lecture et/ou l'enregistrement se font sous le contrôle d'un dispositif d'enregistrement ou d'actualisation, notamment un microprocesseur commandé par un programme.

5. Procédé selon la revendication 1,
**caractérisé en ce que**
les données de l'appareil de commande enregistrées dans l'appareil de commande et qui doivent être actualisées et les données enregistrées sur le support de données, sont munies respectivement d'une caractéristique distinguant l'actualité, notamment une date et/ou une référence de version et/ou les données les plus anciennes à l'appareil de commande sont actualisées ou remplacées par des données plus récentes de l'appareil de commande.

6. Procédé selon la revendication 4,
**caractérisé en ce que**
le dispositif de mémoire ou d'actualisation accède aux données du véhicule telles que les données caractérisant le véhicule en pratique et/ou le type de véhicule en pratique et ensuite à partir de la multitude de données d'appareil de commande enregistrées sur le support de données, il extrait les données respectives de l'appareil de commande prévues pour être enregistrées et/ou actualisées pour le véhicule défini à partir des données de véhicule ou de ses appareils de commande.

7. Procédé selon la revendication 1,
**caractérisé en ce que**
les données d'appareil de commande enregistrées sur le support de données, comportent un ensemble de segments de données qui représentent respectivement les données de l'appareil de commande d'un autre appareil de commande et/ou actualise ces données ou les remplace.

8. Procédé selon la revendication 4,
**caractérisé en ce que**
le dispositif d'enregistrement en mémoire ou d'actualisation pour enregistrer et/ou actualiser les données de l'appareil de commande, extrait et traite au moins en partie une indication de mémoire et/ou d'actualisation enregistrée en partie sur le support de données, notamment une commande de déroulement d'enregistrement et/ou d'actualisation.

9. Procédé selon la revendication 1,
**caractérisé en ce que**
les données d'appareil de commande enregistrées sur le support de données, ont été cryptées et/ou munies de données de contrôle les protégeant contre les falsifications, telles qu'une somme de contrôle ou un moyen analogue.

10. Procédé selon la revendication 9,
**caractérisé en ce que**
les dispositifs de mémorisation ou d'actualisation décryptent les données d'appareil de commande extraites du support de données et/ou vérifient leur authenticité à l'aide de données de contrôle et/ou effectuent une actualisation ou une substitution en cas de décryptage correct ou d'intégrité.

11. Procédé selon la revendication 1 ou 2,
**caractérisé en ce que**
des données d'appareil de commande sont mémorisées dans l'appareil de commande qui ont une information caractérisant leur authenticité et/ou leur version, notamment des données de contrôle.

12. Procédé selon la revendication 1,
**caractérisé en ce que**
le numéro de constructeur du véhicule concerné et/ou les données d'appareil de commande du véhicule concerné, sont des données caractéristiques enregistrées dans une banque de données d'ordinateur, de préférence chez le constructeur.

13. Dispositif d'enregistrement en mémoire et/ou d'actualisation des données d'appareil de commande, tel que notamment un code programme pour commander le déroulement d'au moins un appareil de commande et/ou une commande de champ de caractéristiques d'au moins un appareil de commande d'un véhicule automobile enregistrées dans une mémoire associée à l'appareil de commande, telle que notamment une mémoire semi-conductrice,
dispositif **caractérisé en ce qu'**
il est développé pour exécuter un procédé selon une ou plusieurs des revendications précédentes.

14. Produit programme d'ordinateur qui peut être chargé directement dans la mémoire interne d'un dispositif d'enregistrement en mémoire ou d'actualisation, tel que notamment un ordinateur numérique,
produit **caractérisé en ce qu'**
il comporte des segments de programme pour exécuter un procédé selon une ou plusieurs des revendications précédentes lorsque le produit est exécuté dans un dispositif d'enregistrement en mémoire ou d'actualisation.
